Europäisches Patentamt

European Patent Office

Office européen des brevets

(11) Publication number: **0 167 325**
**A2**

## EUROPEAN PATENT APPLICATION

(21) Application number: 85304366.9

(51) Int. Cl.⁴: **C 10 G 11/16**

(22) Date of filing: 19.06.85

(30) Priority: 05.07.84 US 628062

(43) Date of publication of application:
08.01.86 Bulletin 86/2

(84) Designated Contracting States:
AT BE DE FR GB IT NL SE

(71) Applicant: MOBIL OIL CORPORATION
150 East 42nd Street
New York New York 10017(US)

(72) Inventor: Dwyer, Francis Gerard
1128 Talleyrand Road
West Chester Pennsylvania 19380(US)

(74) Representative: West, Alan Harry
Mobil Court 3 Clements Inn
London WC2A 2EB(GB)

(54) Method of adding ZSM-5 containing catalyst to moving bed catalytic cracking units.

(57) A process for changeover of a moving bed catalytic cracking unit's catalyst inventory from conventional catalyst to ZSM-5 containing catalyst is disclosed. Moderate amounts of catalyst rich in ZSM-5 are added to the circulating catalyst inventory over an extended period of time to avoid a sudden change in catalyst characteristics. After 20-80 percent of the catalyst inventory has been replaced with ZSM-5 rich catalyst, future catalyst additions are made with catalysts containing a reduced ZSM-5 content, or only intermittant ZSM-5 rich catalyst addition is practiced.

Croydon Printing Company Ltd.

## METHOD OF ADDING ZSM-5 CONTAINING CATALYST
## TO MOVING BED CATALYTIC CRACKING UNITS

The invention is an improvement in the moving bed catalytic cracking process.

Catalytic cracking of hydrocarbons with zeolite containing catalyst is a well known process.

In fluidized catalytic cracking, the hydrocarbons contact fluidized catalyst, and are cracked to lighter products. The catalyst is deactivated by coke deposition, necessitating regeneration of coked catalyst in a regenerator.

Closely related to the FCC or fluidized catalytic cracking process is moving bed cracking of hydrocarbons to lighter products. Also known as Thermofor catalytic cracking, the thermofor process is the moving bed analog of the fluidized bed FCC process.

Small beads of catalyst move through a moving bed catalytic cracking zone. Heavy hydrocarbons pass over the catalyst, are catalytically cracked, and removed as cracked products from the cracking reactor. During cracking, coke is deposited on the catalyst, reducing its activity. The catalyst is removed from the cracking reactor and sent to a moving bed catalyst regenerator where coke and any hydrocarbons that happen to remain on a catalyst are burned therefrom. The regenerated catalyst is returned to the reactor for reuse.

In the moving bed regeneration zone associated with the thermofor catalytic cracking unit, the catalyst regeneration usually proceeds in stages. Hydrocarbons are burned off in the top of the moving bed regeneration zone, while coke that is present is usually not removed until further along in the moving bed catalyst regeneration zone. The hydrocarbons are relatively easy to burn off. The coke on the catalyst is much more refractory, and is usually not removed until higher temperatures and/or higher oxygen partial pressures are experienced, conditions which usually occur lower down in the moving catalyst regeneration bed.

Before 1960, both FCC and TCC (thermofor catalytic cracking, or moving bed cracking) units used amorphous catalyst. In the early 1960's, zeolites were introduced into the catalyst.

Relatively large pore zeolites were used. The first zeolite added to cracking catalyst was rare earth exchanged X-type faujasite. This was soon replaced by Y-type faujasite which, because of its higher $SiO_2/Al_2O_3$ ratio was more thermally and hydrothermally stable. Numerous improvements have since been made in zeolite cracking catalysts, but no generic zeolite change or addition has been introduced. Typical of later improvements has been the use of HY, the hydrogen form of Y-type faujasite, and more recently USY, a stabilized form of HY in commercial catalysts. Other changes have involved matrix reformulations for improved thermal and hydrothermal stability and metals tolerance.

Much work has been reported in the patent literature on adding an intermediate pore size zeolite, e.g., ZSM-5, to the conventional cracking catalyst. Use of large pore and small pore crystalline materials in catalytic cracking is known. Quite a lot of work has been done adding ZSM-5, and related intermediate pore size zeolites, to conventional large pore cracking catalyst.

In U.S. Patent 3,758,403, from 2.05 to 10% ZSM-5 catalyst was added to a conventional cracking catalyst containing 10% REY, the remainder being Georgia clay. Examples were given showing use of 1.5, 2.5, 5 and 10 wt % ZSM-5 added to the conventional cracking catalyst.

The ZSM-5 catalyst resulted in increased production of dry gas, some loss of gasoline yield, and an increase in octane number.

ZSM-5 catalyst, especially, virgin catalyst, has exceedingly high activity. Researchers have attempted to take advantage of the super activity of fresh ZSM-5 catalysts by adding only small amounts of it to FCC catalyst. Typical of such work is U.S. Patent 4,309,280 which taught adding very small amounts of powdered neat ZSM-5 catalyst, characterized by a particle size less than 5 microns.

This patent taught that adding as little as 0.25 wt % ZSM-5 powder to the circulating catalyst inventory in an FCC unit would increase dry gas production by 50% (from 3.9 wt % dry gas to 6.0 - see Example 6 in Table 2).

To summarize the state of the art regards addition of ZSM-5 to cracking catalyst, the following general statements can be made. ZSM-5 is exceedingly active, and addition of even small amounts results in greatly augmented production of dry gas, at the expense of gasoline yield.

Another development since the 1970's has been lead phase out in gasoline in the United States and some other countries. Because of concerns about environmental pollution, the amount of lead in gasoline has been severely restricted. Lead also will destroy catalytic converters required in many regions. Accordingly, refiners have been hard pressed to make sufficient volumes of gasoline with satisfactory octane numbers, without the use of lead additives. With all the incentives available for achieving higher product octane number, it would seem that the addition of ZSM-5 catalyst to moving bed cracking units would be very beneficial, and yet such has not occurred.

Although ZSM-5 is a known additive, as discussed above, and has even been compounded with extruded catalyst suitable for use in moving bed catalytic cracking units, such use has never occurred commercially in moving bed cracking units, at least so far as is known. It is believed that one reason such use has not occurred is that if the entire catalyst inventory in a moving bed cracking unit was dumped, and replaced with catalyst containing, e.g., 2.5 wt % ZSM-5, 10 wt % REY, and the remainder being clay or other binder, the downstream processing equipment could not handle all the gas that would be produced.

Subsequent work has also shown that ZSM-5 catalyst, although exceedingly active when new, rapidly loses activity in the harsh regeneration environment experienced in FCC units. The small amounts of hydrogen and hydrocarbon present on the catalyst, upon burning, form water or steam which causes deactivation of ZSM-5 catalyst. This rapid deactivation, although expensive in terms of requiring constant replacement or replenishment of the ZSM-5 was tolerable in an FCC unit where only very small amounts of neat, powdered, relatively pure ZSM-5 catalyst can be continuously added to the catalyst inventory.

Starting up with large amounts of ZSM-5 catalyst would produce excessive light gas which could affect operability of the TCC unit.

It was not believed possible or feasible to add small amounts of powdered ZSM-5, because such powdered materials are not compatible with the relatively large catalyst particles used in moving bed cracking.

Gradual addition of ZSM-5 containing catalyst is a way to overcome some of these difficulties. It would be possible to add ZSM-5 containing catalyst to a TCC unit by removing, on a daily basis, about 0.5 to 1% of the circulating catalyst inventory, and replacing it with catalyst containing the desired amount of ZSM-5, e.g., 2.5 wt %. The only problem with such an approach is that it would take from six months to two years to completely replace the catalyst inventory on such a piecemeal basis. Such an approach would avoid overloading the system with fresh ZSM-5.

A way was discovered to effect relatively rapid changeover of catalyst inventory from conventional catalyst to ZSM-5 containing catalyst.

Accordingly, the present invention provides a method of adding ZSM-5 containing catalyst into a moving bed catalytic cracking unit containing a circulating catalyst inventory of conventional cracking catalyst to produce an equilibrium catalyst containing a desired ZSM-5 content comprising:

(a) removing on a daily average basis from 0.25 to 20% of the circulating catalyst inventory;

(b) replacing the removed catalyst with changeover catalyst containing 1.5 to 10 times the ZSM-5 content of the equilibrium catalyst; and

(c) repeating the steps of catalyst removal and replacement while replacing no more than 50% of the catalyst inventory in a one week period, whereby the ZSM-5 content of the circulating catalyst is smoothly and gradually brought up to the desired ZSM-5 content to produce equilibrium catalyst with the desired ZSM-5 content over a period of at least one week.

## MOVING BED CATALYTIC CRACKING

This process was introduced in the early 1940's and a detailed description thereof is not believed necessary.

Briefly, the process uses a moving bed of catalytic cracking catalyst. Catalyst moves from the catalytic cracking reactor to a moving bed regenerator, and from there back to the reactor.

The oil chargestock to the process, usually without added hydrogen, is passed over the moving bed of catalyst and is catalytically cracked to lighter products. During catalytic cracking, the catalyst is deactivated by coke deposition. Coke deposition is removed from the catalyst in a moving bed regenerator associated with the moving bed cracking unit.

## CONVENTIONAL CRACKING CATALYST

The cracking catalyst can be any conventional cracking catalyst now used or hereafter developed. Relatively large pore zeolites in clay or other matrix material are preferred. It is also possible, and acceptable, to use ultrastable Y, ultrahydrophobic Y, and other conventional large pore catalytic cracking materials.

Suitable cracking catalysts contain 1 to 30 wt % large pore zeolite material, preferably a low sodium, rare earth exchanged Y-type zeolite. Very good results are obtained when the catalyst has 5-15 wt % REY zeolite in the matrix.

## EQUILIBRIUM CATALYST

Preferably the equilibrium catalyst is a conventional TCC catalyst which contains from about 0.5 to 20 wt % ZSM-5. Preferably the equilibrium TCC catalyst will contain 0.1 to 20 wt % ZSM-5, preferably with 1 to 7 wt % ZSM-5.

The equilibrium catalyst may be in any size and shape which has been suitable for moving bed catalytic cracking, and may be either amorphous or zeolitic. Preferably it is a zeolitic catalyst in an amorphous base. Very good results are obtained when the conventional TCC catalyst contains from 8 to 16, and preferably 10 to 12 wt % REY zeolite in a clay base.

The equilibrium catalyst can be in the form of oil dropped spheres, prilled balls, pills or extrudates.

## ZSM-5 - CHANGEOVER CATALYST

ZSM-5 is a well known zeolite, fully described in U.S. Patents 3,702,886 and Re 29,948. Preferably the ZSM-5 will be ion exchanged with ammonium ions and then calcined to place it in the hydrogen or active form. The techniques of ion exchange, calcining, and catalyst manufacture are all conventional and form no part of the present invention.

The changeover catalyst, as distinguished from the equilibrium ZSM-5 catalyst, is relatively rich in ZSM-5.

Preferably the ZSM-5 rich catalyst, or changeover catalyst, contains 1.5 to 10 times the amount of ZSM-5 contained in the equilibrium catalyst.

If it is desired to operate the TCC unit with a 2.5 wt % ZSM-5 catalyst level in the circulating catalyst inventory, the changeover catalyst may contain 3.75 to 25 wt % ZSM-5.

It it is desired to operate with an equilibrium ZSM-5 level of 5.0 wt % in the circulating catalyst inventory, the changeover catalyst might contain from 7.5 to 50 wt % ZSM-5.

Especially good results are obtained when the changeover catalyst contains about 1.75 to 4 times as much ZSM-5 as the equilibrium catalyst.

Very good results are obtained when the changeover catalyst contains approximately two to three times as much ZSM-5 as the equilibrium catalyst.

It is preferred to reduce somewhat the amount of large pore zeolite in the changeover catalyst. The ZSM-5 is meant to be an additive to the conventional large pore zeolite, rather than a total replacement for the large pore zeolite. It is believed that best results are achieved when the large pore zeolite, e.g., REY, content is reduced to compensate for the cracking activity afforded by the ZSM-5. In general, ZSM-5 can act as a partial substitute for the REY zeolite on a 1:1 to a 1:10 basis. Preferably, 2 weights of ZSM-5 will replace 1 weight of conventional zeolite in the catalyst.

If the conventional TCC catalyst contains 12% REY, and 2% ZSM-5 was added to the changeover catalyst, it would be beneficial to reduce the REY content from 12 wt % to 11 wt %. The total zeolite content of the changeover catalyst would increase slightly (from 12 wt % REY to 13 wt %, consisting of 11 wt % REY plus 2 wt % ZSM-5) but the overall catalytic activity of the catalyst would not change greatly.

If the changeover catalyst contains 5% ZSM-5, it would be beneficial to reduce the REY content of the changeover catalyst from 12 wt % down to 9-10 wt % REY.

Changeover catalyst addition can be done on any convenient schedule, e.g. removing from 0.25 to 20% per day. It can be done on a very slow basis, replacing, e.g., the 0.25 wt % per day of the catalyst inventory lost due to attrition and catalyst circulation with changeover catalyst. The only disadvantage to such approach is that it would take a long time to see the ZSM-5 in the unit.

Although there is no constraint, other than economics, on how slowly the ZSM-5 is added, there is a constraint regards how fast the changeover catalyst is added. Because of the very high activity of the ZSM-5 catalyst, you could not simply dump the entire catalyst inventory and replace it with changeover catalyst. The hyperactivity of the virgin ZSM-5 catalyst would result in unacceptable amounts of gas production. Because the virgin ZSM-5 catalyst is so active, it would not even be possible to operate with an equilibrium level ZSM-5 catalyst, without experiencing difficulties in accommodating all the gas production that would occur with the superactive virgin ZSM-5 catalyst.

As long as at least about a week is allowed, the greatest difficulties experienced due to adding changeover catalyst, with a lot of fresh ZSM-5 catalyst, will be avoided. It is better to take longer to complete the changeover catalyst addition.

Preferably, from 0.5 to 10 wt % per day of the circulating catalyst inventory is replaced with changeover catalyst. Most beneficial changeover schedule is 1 to 5% per day of catalyst inventory. This permits a very smooth transition from conventional catalyst to ZSM-5 containing catalyst with minimal disruption of downstream processing units, especially gas handling facilities.

## EQUILIBRIUM CATALYST ADDITION

After the desired amount of changeover ZSM-5 catalyst has been added to the TCC catalyst inventory, ZSM-5 maintenance, rather than addition, can be practiced.

ZSM-5 maintenance means the addition of sufficient ZSM-5 catalyst, and conventional cracking catalyst, to maintain at approximately a steady state level the ZSM-5 content of the TCC catalyst inventory.

If the desired equilibrium in ZSM-5 level is, e.g., 2.5 wt %, this level can be maintained by adding equilibrium catalyst containing 2.5 wt % ZSM-5 and the desired amount of large pore zeolite. It is also possible to simulate equilibrium catalyst addition, by, e.g., mixing on a 50-50 basis changeover catalyst with conventional (non-ZSM-5 containing) cracking catalyst. Alternatively, catalyst addition for one day can be of ZSM-5 rich catalyst (changeover catalyst) followed by one or two days of conventional (non-ZSM-5 containing) cracking catalyst addition.

The distinction between changeover catalyst and equilibrium catalyst is the same distinction between attaining a desired ZSM-5 concentration in the catalyst and maintaining that concentration once it has been attained.

## EXAMPLE 1

This process was tested in a commercial size TCC unit. Operating conditions are shown below:

| | |
|---|---|
| Fresh Feed Rate, $m^3/S$ | $2.45 \times 10^{-2}$ |
| Fresh Feed Rate, BPD | 13,400 |
| Recycle | 0 |
| Catalyst Circulation, tons/hr | 397 |
| Catalyst Circulation, metric tons/hr | 360 |
| Catalyst/Oil | 4.44 wt/wt |
| Reactor Vapor Outlet Temp. | 903°F/484°C |
| Catalyst Activity (CAT-D) | 53.8 |

This unit had a 315 metric ton (347 ton) catalyst inventory.

The conventional catalyst in the unit had the following specifications.

Durabead 10A

Wt % REY                              12.0%
Bead Diameter                         0.36-0.70 cm


    The changeover catalyst had the following properties:

Wt % ZSM-5                            5%
Wt % REY                              7.5%
Bead Diameter                         0.36-0.70 cm

    During normal operation, this unit required makeup catalyst
rates of 1.13 metric tons (1.25 tons) per day.  The makeup catalyst
rate is set to satisfy those catalyst losses due to attrition, and
also to maintain catalyst activity.

    Catalyst addition was usually maintained at 1.8 metric tons (2
tons) per day, although there were short periods of addition rates as
high as 3.6 metric tons (4 tons) per day.

    Results of the test are reported hereafter in Table 1.

    Feed properties are reported hereafter.  The numbers reported
are approximate because the feed was a blend of different crudes, and
the blend varied somewhat.

## Feed Properties

### Test Results

| Test | Test Method | Results |
|------|-------------|---------|
| Pour Point, °C/°F | D 97 | 29/85 |
| Carbon Residue Conradson | D 189 | 0.31 |
| Kinematic Viscosity 40C | D 445-3 | 40.55 |
| Kinematic Viscosity 100C | D 445-5 | 5.922 |
| Aniline Point | D 611 | 164.5 |
| Bromine No. | D1159 | 6.8 |
| Refractive Index Liquids | D1218-9 | 1.49000 |
| API Gravity | D1298-3 | 23.0 |
| Density, g/cc | | 0.916 |
| Molecular Weight | | 353 |
| Sulfur by XRF, 0.002-5% | | 1.65 |
| Hydrogen-Micro Pregl. | | 12.37 |
| Nickel by AA | | 0.25 ppm |
| Vanadium by AA | | 0.70 ppm |
| Iron by AA | | 3.15 ppm |
| Copper by AA | | 0.10 ppm |
| Sodium by AA | | 2.95 ppm |
| Nitrogen-Microdumas | | .16% |

### REDUCED PRESSURE DISTILLATION, D1160

| % (Vol) Over | °C/°F @ 760 mm |
|--------------|----------------|
| IBP | 220/428 |
| 5 | 324/615 |
| 10 | 352/665 |
| 20 | 381/718 |
| 30 | 399/750 |
| 40 | 416/781 |
| 50 | 431/808 |
| 60 | 446/835 |
| 70 | 463/865 |
| 80 | 484/903 |
| 90 | 510/950 |
| 95 | 528/983 |
| EP | 532/990 |

NOTE: IBP = Initial Boiling Point
EP = End Point

TABLE 1

## Reactor Effluent Surveys

|  | | | | |
|---|---|---|---|---|
| Time on Stream, Days | 0 | 72 | 92 | 106 |
| Added Catalyst, tons | 0 | 125 | 177 | - |
| Metric tons | 0 | 113 | 161 | - |

## Reactor Effluent Test Results[1]

|  |  |  | delta |  | delta |  | delta |
|---|---|---|---|---|---|---|---|
| Conversion, % Vol | 53.0 | 53.0 |  | 53.0 |  | 53.0 |  |
| $C_5^+$ Gasoline, % vol. | 42.3 | 40.9 | -1.4 | 40.1 | -2.2 | 43.6 | +1.3 |
| $C_4^-$, % wt | 12.5 | 14.1 | +1.6 | 13.6 | +1.1 | 12.2 | -0.3 |
| $C_4^=$, % vol | 3.8 | 4.6 | +0.8 | 4.6 | +0.8 | 4.2 | +0.4 |
| $C_3^=$, % vol | 3.7 | 4.7 | +1.0 | 4.8 | +1.1 | 4.2 | +0.5 |
| Potential Alkylate, % vol | 12.7 | 15.7 | +3.0 | 15.9 | +3.2 | 14.2 | +1.5 |
| Add'l i-$C_4$'s req'd | 4.1 | 6.2 | +2.1 | 6.1 | +2.0 | 5.5 | +1.4 |
| LFO[2], % vol | 29.9 | 29.1 | -0.8 | 29.3 | -0.6 | 26.4 | -3.5 |
| Octane No. - R+O[3] | 86.0 | 90.2 | +4.2 | 90.5 | +4.5 | 91.2 | +5.2 |
| - M+O[4] | 77.4 | 79.2 | +1.8 | 79.6 | +2.2 | 79.5 | +2.1 |

[1] Normalized to same conversion and feed properties

[2] LFO = Light Fuel Oil

[3] R+O = Research Octane Number, with no lead addition

[4] M+O = Motor Octane Number, with no lead addition.

The circulating catalyst had, on average, slightly less than 2.5 wt % ZSM-5. Roughly half the catalyst inventory had been replaced with changeover catalyst which was rich in ZSM-5.

Conventional catalyst addition continued after a 2.5 wt % ZSM-5 level had been obtained. This was primarily to make up for normal attrition losses. This catalyst addition averaged roughly about 0.5% per day of catalyst inventory. This make-up catalyst added had no ZSM-5 added. The reason for this was to obtain information regarding decay characteristics of the ZSM-5 containing catalyst.

From the data in Table 1, it can be seen that the technique afforded by the present invention permitted a very smooth transition from conventional operation to ZSM-5 promoted catalytic cracking. At no time did the unit, or downstream gas processing facilities, have to suffer through production of copious amounts of dry gas.

Somewhat surprisingly, the ZSM-5 addition technique of the present invention resulted in significantly less dry gas production than would have been anticipated from the prior art. The data in Table 1 show that the production of light gases goes up by less than 10%, with the addition of 2.5 wt % ZSM-5. In the prior art patent where fresh powdered ZSM-5 catalyst was added, addition of 0.25 wt % ZSM-5 resulted in approximately a 50% increase in dry gas production.

It is surprising that in practicing the present invention it was possible to add 10 times as much ZSM-5 (2.5 wt % vs. 0.25 wt %) while producing even less incremental light ends production than did the prior art process.

The effect is not simply one of catalyst deactivation. If the ZSM-5 catalyst addition scheme of the present invention was merely so slow and drawn out as to result in the death of the entire inventory of ZSM-5 catalyst, there would be no increase in product octane number, and yet a very substantial octane number increase was achieved.

Example 2 - Laboratory Evaluation

Laboratory tests were conducted using ZSM-5 catalyst in a standard laboratory test apparatus designed to simulate a moving bed cracking operation.

## Feedstock Properties

The feedstock was a gas oil fraction having the approximate properties reported earlier.

## Changeover Catalyst

The changeover catalyst used in the laboratory test was the same changeover catalyst used in the commercial test.

The catalyst addition scheme used was designed to rapidly bring the ZSM-5 content of the circulating or equilibrium catalyst to the desired level well before 72 days of operation.

- 14 -

**TABLE 2**

Laboratory Evaluation of Catalyst Samples

| Days | 0 | 72 | delta | 92 | delta | 106 | delta | 158 | delta | 226 | delta |
|---|---|---|---|---|---|---|---|---|---|---|---|
| Conversion, % vol | 50 | 50 | - | 50 | - | 50 | - | 50 | - | 50 | - |
| Gasoline, % vol | 41.6 | 39.6 | -2.0 | 39.8 | -1.7 | 38.8 | -2.7 | 40.9 | -0.7 | 41.5 | -0.1 |
| $C_4^=$, % vol | 2.9 | 3.5 | +0.6 | 3.5 | +0.6 | 3.7 | +0.8 | 3.3 | +0.4 | 3.0 | +0.1 |
| $C_3^=$, % vol | 3.0 | 4.1 | +1.1 | 4.1 | +1.1 | 4.3 | +1.3 | 3.7 | +0.7 | 3.8 | +0.8 |
| Potential Alkylate, % vol | 9.9 | 12.9 | +3.0 | 12.9 | +3.0 | 13.5 | +3.6 | 12.0 | +2.1 | 11.6 | +1.7 |
| Add'l i-$C_4$'s Req'd, % vol | 2.8 | 4.2 | +1.4 | 4.0 | +1.2 | 4.3 | +1.5 | 4.1 | +1.3 | 4.0 | +1.2 |
| Octane No. - R+O | 83.5 | 85.5 | +2.0 | 85.5 | +2.0 | 85.7 | +2.2 | 84.5 | +1.0 | 84.1 | +0.6 |

These results are consistent with the results of the experimental tests on the commercial sized unit.  Gradual addition of ZSM-5 rich catalyst results in a smooth transition from conventional catalyst to ZSM-5 catalyst in thermocracked catalytic cracking units.

If specifying a changeover catalyst and process for commercial use today, it would be done in approximately the same way as the commercial test.

The changeover catalyst might have a slightly higher REY content, i.e., about 5% ZSM-5 and about 10% REY.

F-2908                              - 16 -

## CLAIMS

1. A method of adding ZSM-5 containing catalyst into a moving bed catalytic cracking unit containing a circulating catalyst inventory of conventional cracking catalyst to produce an equilibrium catalyst containing a desired ZSM-5 content comprising:

(a) removing on a daily average basis from 0.25 to 20% of the circulating catalyst inventory;

(b) replacing the removed catalyst with changeover catalyst containing 1.5 to 10 times the ZSM-5 content of the equilibrium catalyst;

(c) repeating the steps of catalyst removal and replacement while replacing no more than 50% of the catalyst inventory in a one week period, whereby the ZSM-5 content of the circulating catalyst is smoothly and gradually brought up to the desired ZSM-5 content to produce equilibrium catalyst with the desired ZSM-5 content over a period of at least one week.

2. Method of Claim 1 wherein the equilibrium catalyst contains 0.1 to 20 wt % ZSM-5.

3. Method of Claim 1 wherein the equilibrium catalyst contains 1 to 7 wt % ZSM-5.

4. Method of any of Claims 1 to 3 wherein the changeover catalyst contains from 1.75 to 4 times as much ZSM-5 as the equilibrium catalyst.

5. Method of any of Claim 1 to 4 wherein the conventional catalyst contains 1 to 30 wt % large pore zeolite.

6. Method of any of Claims 1 to 5 wherein the conventional catalyst contains 5 to 15 wt % rare earth exchanged Y zeolite.

7. Method of Claims 5 or 6 wherein the changeover catalyst contains a reduced content of large pore zeolite as compared to the conventional catalyst.

8. Method of any of Claims 1 to 7 wherein from 0.5 to 10 wt % per day of the circulating catalyst inventory is removed and replaced with changeover catalyst.

9. Method of any of Claims 1 to 7 wherein from 1 to 5 wt % per day of the circulating catalyst inventory is removed and replaced with changeover catalyst.

10. Method of any of Claims 1 to 9 wherein at least a portion of the catalyst removed is removed by attrition and conventional catalyst losses due to catalyst circulation.


6501H/0448H